# EUROPÄISCHE PATENTANMELDUNG

(11) **EP 0 956 847 A2**
(43) Veröffentlichungstag der Anmeldung: **17.11.1999**
(21) Anmeldenummer: 99107138.2
(22) Anmeldetag: 13.04.1999
(51) Int. Cl.: A61G 7/10

(54) **Sitzvorrichtung zum Einsetzen in eine Dusch- oder Badewanne**

(30) Priorität: 27.04.1998 DE 19818821
(71) Anmelder: Gobbers, Dieter, Lehigh Acres, FL 33970 (US); Gobbers, Walter, Lehigh Acres, FL 33970 (US)
(72) Erfinder: Gobbers, Dieter, Lehigh Acres, FL 33970 (US)
(74) Vertreter: Dr. Weitzel & Partner

(57) **Zusammenfassung**

Die Erfindung betrifft eine Sitzvorrichtung zum Einsetzen in eine Dusch- oder Badewanne
mit einem heb- und senkbaren Sitz;
mit einer teleskopierbaren Hubsäule, die am Sitz angreift.

Gemäß der Erfindung wird folgendes vorgesehen:
die Säule ist aus miteinander zusammenarbeitenden Elementen gebildet, die zwei End-Elemente sowie wenigstens ein dazwischen befindliches Mittelelement aufweisen;
wenigstens die Mittelelemente sowie ein erstes End-Element weisen Außengewinde auf;
wenigstens die Mittelelemente sowie das zweite Außenelement weisen ein Innengewinde auf;
dem einen End-Element ist ein Antrieb 3 zugeordnet, der dieses End-Element um dessen Längsachse in beiden Richtungen zu verdrehen vermag.

## Beschreibung

Die Erfindung betrifft eine Vorrichtung zum Einsetzen in eine Badewanne oder dergleichen als Ein- und Ausstiegshilfe.

Derartige Vorrichtungen sind für ältere oder gebrechliche Personen hilfreich oder unerläßlich. Sie ermöglichen ein sicheres und bequemes Ein- und Aussteigen in eine Badewanne, einen Zuber oder dergleichen.

Die Grundkonstruktion hat in jedem Falle eine Sitzplatte. Die Sitzplatte ist im allgemeinen von einem Scherengestell getragen, dessen Scherenhebel verstellbar sind und damit ein Verändern der Höhe der Sitzplatte bewirken. Auch bezüglich des Antriebes gibt es mehrere Möglichkeiten. Der Antrieb kann elektromotorisch sein oder pneumatisch oder in der Ausnutzung des Wasserdruckes des kommunalen Wassernetzes bestehen.

Eine solche Vorrichtung ist aus DE 44 37 515 A1 bekannt geworden. Dabei greift am Sitz ein Hubmechanismus in Gestalt einer Teleskopsäule an. Diese weist eine Mehrzahl von Teleskopzylindern auf, die ein- und ausfahrbar sind. Das untere Ende der Teleskopsäule stützt sich dabei - mittelbar oder unmittelbar - am Boden der Wanne ab, und das obere Ende am Sitz.

Bei allen Vorrichtungen und Geräten, die für Behinderte bestimmt sind, geht es in erster Linie um die Zuverlässigkeit bei der Benutzung. So darf sich bei der Ausführungsform mit der genannten Teleskopsäule auf gar keinen Fall die einmal eingestellte Höhe verändern, ohne daß der Benutzer dies will. Der Benutzer sollte in der Lage sein, die Höhe positiv, zuverlässig und bleibend auf jeden beliebigen Wert einzustellen.

Dieses Erfordernis ist bei der bekannten Ausführungsform mit der genannten Teleskopsäule nicht immer gegeben. Dies ist insbesondere dann der Fall, wenn der Antrieb für das Ein- und Ausfahren der Säule ein pneumatischer oder hydraulischer ist. Bei Belastung des Sitzes kann es dabei nämlich zu ruckartigen Absenkungen des Sitzes kommen.

Der Erfindung liegt die Aufgabe zugrunde, eine Sitzvorrichtung der genannten Art derart zu gestalten, daß der Sitz stufenlos heb- und senkbar ist, und daß die einmal eingestellte Höhe ungeachtet der Belastung des Sitzes unverändert bleibt.

Die Erfindung ist anhand der Zeichnung näher erläutert. Darin ist im einzelnen folgendes dargestellt:
- Figur 1: zeigt einen in eine Badewanne einsetzbaren Stuhl mit heb- und senkbarem Sitz.
- Figur 2: zeigt eine alternative Ausführungsform des Gegenstandes von Figur 1.
- Figur 3: veranschaulicht eine aus Einzelelementen aufgebaute Säule in ausgefahrenem Zustand.
- Figur 4 bis Figur 7: lassen Einzelheiten von Einzelelementen erkennen.

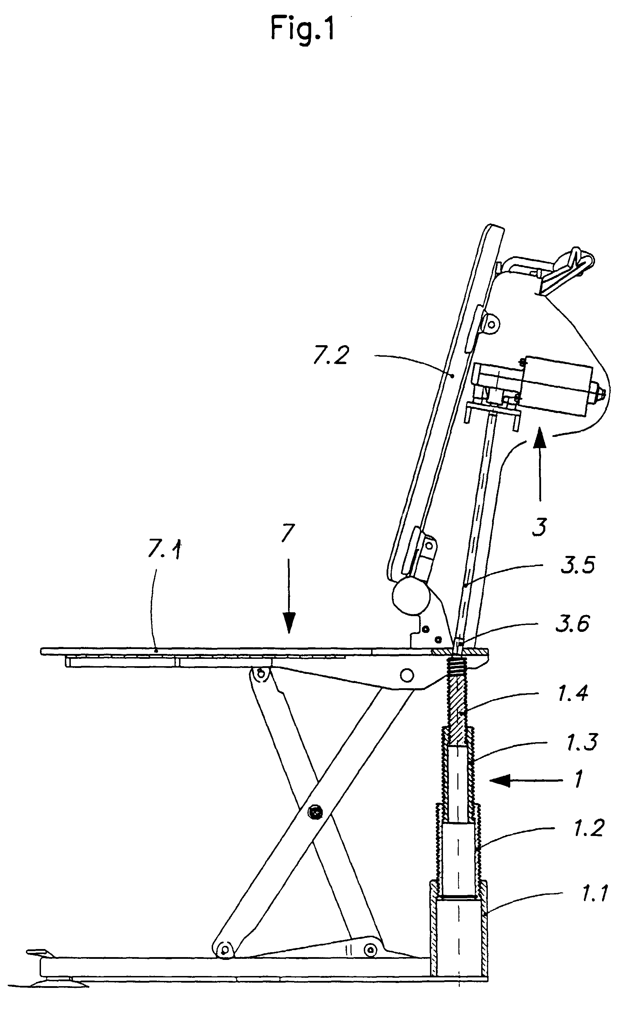

Bei der Ausführungsform gemäß Figur 1 erkennt man einen Stuhl 7. Dabei handelt es sich um einen Stuhl, der in der Reha-Branche als "Badelift" bezeichnet wird und der dazu dient, in eine Badewanne oder dergleichen eingesetzt zu werden, so daß er von Behinderten oder von älteren Menschen als Ein- und Ausstiegshilfe benutzt werden kann. Diese Badelift weist einen Sitz 7.1 und eine Rückenlehne 7.2 auf. Der Sitz ist mittels einer erfindungsgemäßen Säule 1 auf- und abfahrbar. Dabei überträgt ein Antrieb 3 über eine Welle 3.5 mit Kardangelenk 3.6 ein Drehmoment auf das oberste Element 1.4 der Säule.

Die Säule 1 weist noch weitere Elemente auf, nämlich die Elemente 1.1, 1.2, 1.3. Wie man sieht, ruht der Sitz 7.1 auf einem Scherengestell.

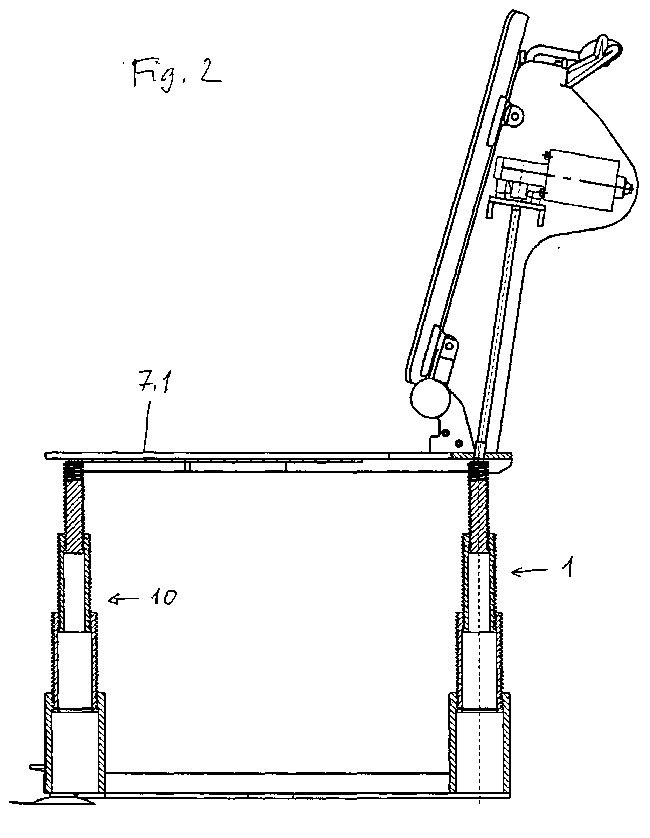

Die Ausführungsform gemäß Figur 2 unterscheidet sich von jener gemäß Figur 1 in folgenden: Sie weist kein Scherengestell auf. Stattdessen ruht der Sitz 7.1 auf vier Teleskopsäulen, von denen in dieser Seitenansicht nur die Säulen 1 und 10 zu sehen sind. Alle übrigen Elemente sind dieselben wie bei der Ausführungsform gemäß Figur 1.

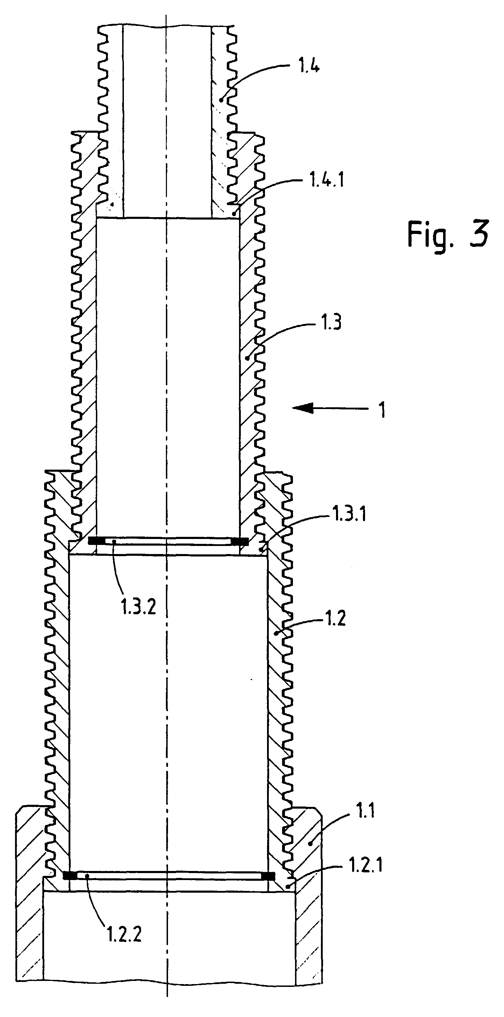

Die in Figur 3 gezeigte Säule 1 ist aus mehreren zylindrischen Elementen 1.1 bis 1.4 aufgebaut. Wie man sieht, sind die Elemente 1.2, 1.3 und 1.4 mit Außengewinde versehen. Die Elemente 1.1, 1.2, 1.3 weisen außerdem in ihren oberen Bereichen jeweils ein Innengewinde auf. Alle Gewinde sind im vorliegenden Falle Trapezgewinde. Es könnten jedoch auch andere Gewindeprofile vorgesehen werden, beispielsweise Rundgewinde.

Die hier dargestellte Kraftübertragungseinrichtung ist in ausgefahrenem Zustand dargestellt.

Element 1.2 weist an seinem Fuß einen Bund 1.2.1 auf Element 1.3 weist an seinem Fuß einen Bund 1.3.1 auf Element 1.4 weist an seinem Fuß einen Bund 1.4.1 auf. Diese Bunde dienen als Anschlag und verhindern das völlige Ausfahren des betreffenden Elementes aus dem jeweils darunter befindlichen Element. Sie dienen außerdem zur Führung und zur Aufnahme von Biegekräften.

Die Elemente 1.2 und 1.3 sind ferner - wiederum im Fußbereich - mit einem Sicherungsring 1.2.2 beziehungsweise 1.3.2 versehen. Diese Sicherungsringe dienen ebenfalls als Anschläge beim Einfahren der Einzelelemente ineinander, so daß ein "Durchfahren" eines Elementes durch das darunter befindliche verhindert wird. So schlägt beispielsweise Bund 1.3.1 beim Herunterschrauben von Element 1.3 gegen den Sicherungsring 1.2.2 von Element 1.2 an.

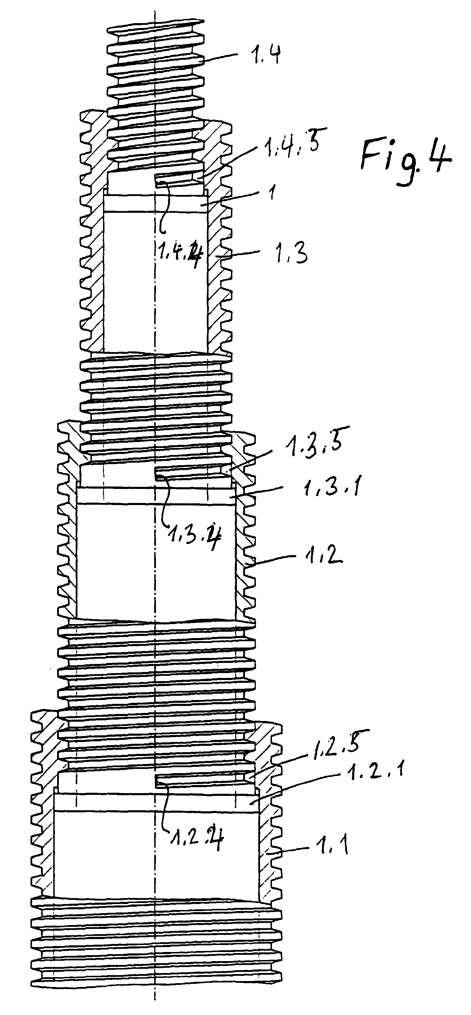

Figur 4 zeigt wiederum eine aus Einzelelementen aufgebaute Säule in ausgefahrenem Zustand. Man erkennt die Bunde 1.2.1, 1.3.1 und 1.4.1, die auch in Figur 2 zu sehen sind.

Die Innen- und Außengewinde der einzelnen Elemente 1.1., 1.2, 1.3 und 1.4 sind wiederum Trapezgewinde.

Die Besonderheit liegt in folgendem:
Das Gewinde eines jeden Elementes endet in seinem unteren Bereich plötzlich, das heißt ohne ein sanftes Auslaufen. Die Gewinderille endet somit mit einer im wesentlichen achssenkrechten Fläche 1.2.4, 1.3.4, 1.4.4. Den genannten Endflächen einer jeden Gewinderille entspricht eine Anschlagfläche 1.2.5, 1.3.5, 1.4.5 der zugehörenden Gewinderippe. Damit werden Anschläge geschaffen, die ein weiteres Verdrehen im Sinne eines Herausfahrens der einzelnen Elemente auseinander verhindern.

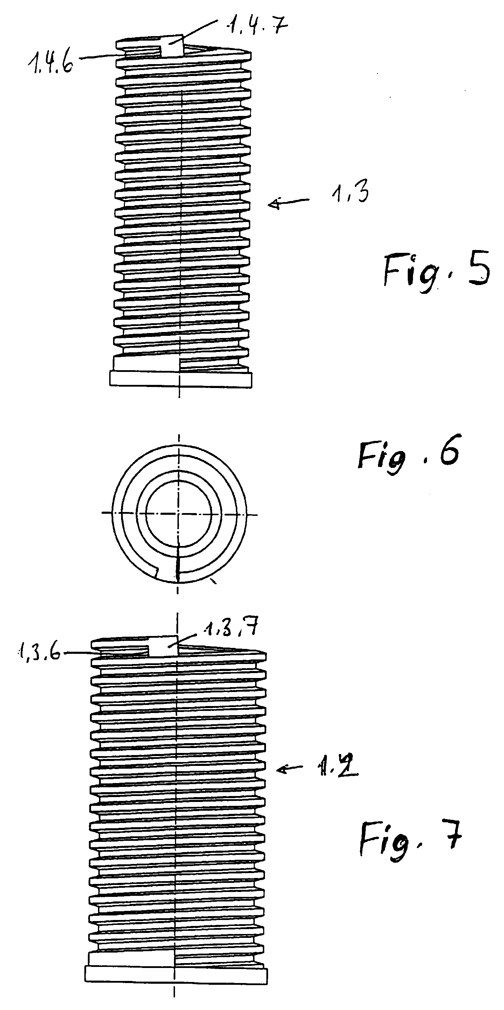

Figur 5 zeigt wiederum Element 1.3, Figur 6 zeigt Element 1.2 und Figur 7 zeigt die beiden Elemente in Draufsicht.

Wie man erkennt, sind die Gewinde im oberen Bereich ähnlich gestaltet wie im unteren Bereich. So hört der letzte Gewindegang beim Element 1.3 mit einer Anschlagfläche 1.4.6 plötzlich auf, ohne sanft auszulaufen. Bei Element 1.2 erkennt man die Anschlagfläche 1.3.6. Dabei werden die Anschlagflächen aus Sperrteilen 1.4.7 beziehungsweise 1.3.7 gebildet, die eigenständige Bauteile sind und die beispielsweise durch Verschrauben mit dem jeweiligen Element fest verbunden sind.

Ein Vorteil dieser Ausführungsform besteht darin, daß die Sicherungsringe entfallen können, die in Figur 3 gezeigt sind - siehe dort die Sicherungsringe 1.2.2 und 1.3.2.

## Patentansprüche

1. Sitzvorrichtung (7) zum Einsetzen in eine Dusch- oder Badewanne
1.1 mit einem heb- und senkbaren Sitz (7.1)
1.2 mit einer teleskopierbaren Hubsäule (1), die am Sitz (7.1) angreift
1.3 die Säule (1) ist aus miteinander zusammenarbeitenden Elementen (1.1, 1.2, 1.3, 1.4, 1.5) gebildet, die zwei End-Elemente sowie wenigstens ein dazwischen befindliches Mittelelement aufweisen
1.4 wenigstens die Mittelelemente sowie ein erstes End-Element weisen Außengewinde auf
1.5 wenigstens die Mittelelemente sowie das zweite Außenelement weisen ein Innengewinde auf
1.6 dem einen End-Element ist ein Antrieb 3 zugeordnet, der dieses End-Element um dessen Längsachse in beiden Richtungen zu verdrehen vermag.

2. Sitzvorrichtung nach Anspruch 1, dadurch gekennzeichnet, daß Anschläge (1.2.1, 1.3.1, 1.4.1) vorgesehen sind, die ein völliges Ausfahren eines Elementes aus einem benachbarten Element verhindern und die gegebenenfalls eine Längsführung bewirken und Biegekräfte aufnehmen.
